# EUROPEAN PATENT SPECIFICATION

(11) **EP 0 402 179 B1**
(45) Date of publication and mention of the grant of the patent: **30.10.1996**
(21) Application number: 90306341.0
(22) Date of filing: 11.06.1990
(51) Int. Cl.: H02K 7/14, H02K 7/08, H02K 5/10, H02K 29/00

(54) **An electric motor**
Elektrischer Motor
Moteur électrique

(30) Priority: 09.06.1989 GB 8913364
(43) Date of publication of application: 12.12.1990
(60) Divisional application: 96105545.6
(73) Proprietor: PAPST LICENSING GmbH, 78549 Spaichingen (DE)
(72) Inventor: Cap, Heinrich, 7742 St. Georgen (DE); Elsässer, Dieter, 7742 St. Georgen (DE); Koletzki, Ulrich, 7742 St. Georgen (DE); Papst, Georg Friedrich, 7742 St. Georgen (DE)
(74) Representative: Needle, Jacqueline

(56) References cited:
- EP-A- 0 291 295
- DE-A- 2 325 473
- DE-A- 2 645 677
- DE-A- 3 135 385
- DE-A- 3 326 543
- US-A- 4 760 298

## Description

The present invention relates to an electric motor.

There is a continuing demand for compactness in electric motors for directly driving rotary loads, such as information storage disks. This demand has been satisfied by providing drive motors of the external rotor type, which can be axially relatively short.

US-A-4760298 describes an electric drive motor comprising a shaft defining a central axis, a stator carrying a winding arranged substantially coaxially relative to said central axis, and a rotor arranged substantially coaxially relative to said central axis and to be external relative to, and to substantially surround, said stator winding wherein a mounting flange for supporting said motor is arranged substantially coaxially relative to said central axis, said stator and said mounting flange together forming a stationary part of said motor, said mounting flange having an axially extending recess surrounded by a mounting rim, and wherein said rotor comprises a cup-shaped rotor of magnetic material which projects into said recess.

However, is it now required that the information storage disks have ever diminishing diameters so that the apparatuses which hold them can also be more compact. At the same time, the motor must still supply adequate torque, and have a certain minimum angular momentum and smooth-running operation. Furthermore, it is necessary to inhibit the passage of dirt particles from motor bearings and torque-generating regions towards a "clean room" region, all without increasing the overall axial dimension of the motor.

According to the present invention an electric drive motor as defined above is characterised in that said shaft is arranged to support a hub for rotation by said motor, said hub and said rotor forming a movable part of said motor, in that said hub comprises a disk-bearing element having a substantially radially extending lower surface, in that said cup-shaped rotor has a substantially radially extending, substantially planar base with which said lower surface of said hub is engaged, and in that the diameter of a cylindrical air gap defined between the stator and the rotor is greater than the external diameter of said hub.

In an embodiment, the mounting flange has an axially-deepened tank form which facilitates an offset mounting rim thereon. This rim amy be aligned substantially in the back plane of the rotor, thereby avoiding axial lengthening of the motor. The offset mounting rim together with the rotor may be arranged to provide an approximation of an outer labyrinth seal for dust particles from the motor and provide superior magnetic shielding.

Preferably, the motor has a stationary shaft enabling axial separation of ball bearings and a central annulus of the flange. This may lead to a corresponding reduction in the diameter of the motor.

An embodiment of the present invention will hereinafter be described, by way of example, with reference to the accompanying drawing, in which the sole Figure shows a section of half of a drive motor of the invention.

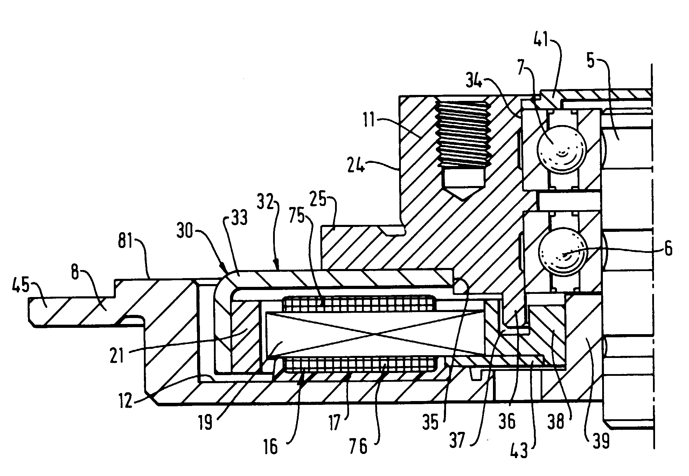

In Figure 1 there is shown in section a drive unit 1, which serves for example as a hard disk storage drive. This drive unit 1 incorporates a drive motor 30 having a substantially cup-shaped or bell-shaped rotor 33. The rotor 33 is preferably deep-drawn out of soft iron sheet and surrounds a generally annular permanent magnetic rotor magnet 21 which serves as the magnetic return path in a simultaneously provided outer rotor housing. The permanent magnetic rotor magnet 21 is fastened to the inner surface of a substantially cylindrical wall of the rotor 33. One end surface of the rotor magnet 21 terminates approximately at the edge of the cylindrical wall at the open end of the rotor 33. The opposite end surface of the rotor magnet 21 is spaced from the inner surface of the base of the rotor 33, but alternatively, may be connected thereto, for example, by a hard and tough plastics layer, for example, of a hot-setting adhesive.

The drive motor 30 has a shaft 5 which is substantially centrally mounted and fixed to a mounting flange 8. The shaft 5 is supported in axially spaced ball bearings 6, 7, the inner rings of which are rigidly mounted on the shaft 5. The outer rings of the ball bearings 6, 7 are mounted at a predetermined spacing on the inner wall 34 of the central bore of a hub 11. The hub 11 is arranged to be rotatable relative to the shaft 5 which is stationary. Preferably the hub 11 is a one-piece part made of aluminium. The hub 11 has a first projection 35 extending centrally into the base of the bell-shaped rotor 33 and is rigidly connected thereto, for example, circumferentially by sputtering or gluing. A second projection 36 of the hub 11 extends into an annular groove 37 of an annular part 38. A U-shaped gap defined between the projection 36 and the annular groove 37 acts as a labyrinth packing. The centrla bore of the annular part 38 is fixed rigidly to a hub-like projection 39 of the mounting flange 8. Stator laminations 19, preferably in the form of a grooved stack of sheets, are fixed with the winding to the radial outer side of the annular part 38. Hot-setting adhesive or a different plastics is inserted into the gap 17 between the flange-sided winding head 16 and the inner wall of a recess 12 of the flange 8. A cover disk 41 sealing the mounting of the motor from the "clean room" environment is arranged on the upper ball bearing 7.

Instead of hot-setting adhesive, other plastics can be used for the connection of motor parts as, for example, easy to work casting resins.

The mounting flange 8 comprises a cup-shaped flange having an axially extending recess defined therein into which the cup-shaped rotor 33 projects. The flange 8 has a substantially annular, axially projecting rim 81 having a substantially radially extending outer surface which extends substantially in the same plane as that containing the outer surface 32 of the base of the cup-shaped rotor 33.

The stationary shaft 5 is arranged substantially centrally of the floor of the recess of the flange 8 and is rigidly inserted within the central bore of the projection 39 of the mounting flange 8.

The base surface of the cup-shaped rotor 33 extends radially inwardly towards the shaft 5, preferably to extend over or beyond the windings 19. In this manner, the base surface of the rotor 33 provides magnetic shielding for the disk chamber adjacent the hub 11, where magnetic information disks, and reading and recording heads are housed.

The drive unit illustrated, which has a stationary shaft, has a very compact arrangement. A cover disk 41 is arranged to rotate with the hub 11, and in the illustrated embodiment forms the upper axial termination of the hub 11. The cover disk 41, which extends over the ball bearing 7, is bonded to the hub 11. In this manner, a flawless separation or seal of the upper ball bearing 7 from the "clean room" disk chamber is provided.

Under the lower ball bearing 6 and also within the rotor bell-shape, the labyrinth seal 23, 36, 37, 38 is provided. This seal or packing extends into the stator side of the flange 8. These stator-side labyrinth elements 23, 38, engage or extend around a rotor-side, ridge-like projection 36 and are supported on the hub-like projection 39 of the flange or on the flange base. Alternatively, the stator could be directly fixed to the mounting flange 8, for example, to its projection 39. In this case, a seal or packing is not required.

In the illustrated embodiment, the central stationary shaft 5 is held in the projection 39, and the one piece hub 11 extends, by way of at least the ridge-like projection 36, downwardly into the annular groove formed by the walls of elements 23 and 38. The hub 11 is arranged to carry at least one disk (not shown) on its outer cylindrical surface 24. Preferably, the one or the first disk is supported also on a generally flat shoulder 25 of the hub 11. The cup-shaped rotor 33 is held on the shoulder 35 of the hub from below, and the hub also supports the cover disk 41 that rotates with it over the upper bearing 7. The hub has at least one axially extending projection 36, which rotates in the stator-side labyrinth seal projections, and extends below the lower ball bearing 6. Between the labyrinth seal and the cover disk 41 the two ball bearings 6 and 7 are axially arranged.

The hub-like projection 39 centrally arranged of the flange 8, which holds the, for example, press-fit stationary shaft, supports the stator 19. The stator is set over the annular part 23 (including the axial groove) to which it is fastened, for example, by means of glue. This mounting can also be accomplished by injecting the entire stator block (laminated core grooved winding) together with at least the recessed part of the flange 8. Outer winding extremities 75, 76 of the stator winding may be overlaid with a casting resin seal so that there is no risk that dirt particles will move out of the stator winding region 75, 76 into the "clean room". To achieve this casting resin is injected in the crucial places well and compactly.

The mounting flange 8 is provided at its extreme outer edge with a radial projection or rim 45 which is utilised to fasten the motor 30 into disk information storage apparatus. In general, this projection 45 will be connected to a lower wall defining the "clean room", for example, by screws or a screw-connection.

The axial integration of a direct drive, external rotor, motor (with cylindrical air gap) makes possible the full use in the hub of an in-hub-motor of the radially intermediate space between the preferable stationary shaft and the output-bearing cylindrical hub wall for the storage arrangement, which can also occupy the entire available axial space reaching to the adjacent motor region.

The outer diameter of the cylindrical air gap is not dependent upon the hub diameter. This enables the stator to be more annular, because the inner stator is, so-to-speak, shifted radially away from the shaft axis. The axial projections from both the rotor and stator sides which are axially annularly interdigitated among one another for rotary motion (which could also be a larger number of ridge-like projections) are arranged radially between the stator and the shaft. This near-shaft region also receives the cover which covers the bearing space to separate it from the "clean room", as well as any arrangements for separating or sealing the inner motor space from the "clean room".

This radially extending, intermediate space between the central shaft and its support and the inner surface of the stator annulus is available because there is no need to provide a radially wider electromagnetic field with a large air gap diameter for the stator annulus, that is, for the laminated stator magnetic stock.

Embodiments of the invention have the advantage that an increased momentum requirement is producible (achievable because the air gap can be kept large, and in any case is not dependent upon hub diameter) which is dependent upon the standardization requirements for information storage disks. Since the tendency is towards ever-smaller disks, output drive diameter also tending to be smaller, so the power requirements for a drive motor placed in the hub is set at pre-existing limits.

In a drive unit as described, the diametrical moment arm of the air gap of an outer rotor motor may be increased as desired, practically at will, through radial enlargement of the axially deepened flange configuration. The deepening of the flange configuration in itself permits an axial compactness because the bearings 6, 7 and axial projection 39 are axially, rather than radially aligned.

The iron cup or rotor 33 in the motor housing provides relatively good magnetic shielding because it also acts as the magnetic return path. Generally, the cup 33 is therefore thicker than would be needed for magnetic shielding.

In this way, all of the space between the outer surface of the stationary shaft and the inner wall of the hub for the output system is put to good use.

If the outer hub diameter must become smaller, because of the ever-diminishing diameter of the information storage disks, and therewith also a diminishing size above a minimum size of a central hole must be set, there is virtually no alternative to the one-piece hub 11 as described above, to be made out of low-remanence magnetic material.

A circuit board 43 is supported on the base of the recess of the flange 8. The circuit board 43 has a printed circuit thereon, and may form part of the connection of the stator-side casting resin seal. The motor thus provided, which boasts a large ratio or air gap diametrical dimension to axial length, is, for example, a brushless outer rotor motor with three strings provided for a three-or-six pulse drive, or for a two- or one-pulse drive provided, such as that described in the following patent documents DE-O5 22 25 442; (offenlagungschaft) and DE-PS 23 46 380 and/or DE-PS 23 14 259.

The invention is especially suitable for motors whose diameter D is large compared to the overall axial length L, that is, D/L amounts to at least 2.

It will be appreciated that modifications and variations to the invention as described and illustrated can be made within the scope of the appended claims.

## Claims

1. An electric drive motor (30) comprising a shaft (5) defining a central axis, a stator (19) carrying a winding (75, 76) arranged substantially coaxially relative to said central axis, and a rotor (33) arranged substantially coaxially relative to said central axis and to be external relative to, and to substantially surround, said stator winding (75, 76), wherein a mounting flange (8) for supporting said motor (30) is arranged substantially coaxially relative to said central axis, said stator (19) and said mounting flange (8) together forming a stationary part of said motor, said mounting flange (8) having an axially extending recess surrounded by a mounting rim (45), and wherein rotor (33) comprises a cup-shaped rotor of magnetic material which projects into said recess, characterised in that said shaft (5) is arranged to support a hub (11) for rotation by said motor, said hub (11) and said rotor (33) together forming a movable part of said motor, in that said hub (11) comprises a disk-bearing element having a substantially radially extending lower surface, in that said cup-shaped rotor (33) has a substantially radially extending, substantially planar base (32) with which said lower surface of said hub is engaged, and in that the diameter of a cylindrical air gap defined between the stator (19) and rotor (33) is greater than the external diameter of said hub (11).

2. An electric motor as claimed in Claim 1, wherein part of said mounting flange (8) is substantially radially aligned with said substantially planar base (32) of said rotor (33).

3. An electric drive motor as claimed in Claim 1 or Claim 2, wherein said mounting flange (8) has an axially deepened tank form and said mounting rim (45) of said mounting flange (8) is axially offset relative to said recess and, together with said rotor (33), provides an approximation to an outer labyrinth seal.

4. An electric drive motor as claimed in any preceding claim, wherein said shaft (5) is stationary and extends beyond said stator (19), and wherein bearing means (6, 7) are arranged on said shaft (5) on which said hub (11) is supported.

5. An electric drive motor as claimed in any preceding claim, wherein said stator (19) is supported within said recess in the mounting flange (8) within the limits of said rotor (33).

6. An electric drive motor as claimed in any preceding claim, wherein said cup-shaped rotor (33) is deep-drawn, of soft magnetic material, and carries permanent magnetic elements (21), said cup-shaped magnetic material and said permanent magnet elements effectively covering the stator (19).

7. An electric drive motor as claimed in any preceding claim, wherein said hub (11) comprises support means for information storage disks, and a cover plate (41) rotatable with the hub, and wherein said cup-shaped rotor (33) is positioned to form magnetic shielding means for shielding the stator (19) from said support means.

8. An electric drive motor as claimed in any preceding claim, wherein movable and stationary parts of said motor are interdigitated, and said interdigitated movable and stationary parts (36, 37, 38) define seal means arranged between the hub (11) and the stator, and radially within the stator and axially offset relative to bearing means (6, 7) for said hub toward the flange.

9. An electric drive motor as claimed in any preceding claim, wherein said shaft (5) is stationary, a first part of the shaft being mounted in the recess of said mounting flange (8), and a second part of the shaft carrying bearing means (6, 7) for said hub (11), wherein the axial length of said bearing means (6, 7) approaches that of said second part of the shaft (5), and wherein the axial length of said first and second parts of the shaft is substantially the same.

10. An electric drive motor as claimed in any preceding claim, wherein a conductor plate and/or a shielding ring (43) is located between said mounting flange (8) and the winding of the stator (19), and for example, is or are partially or entirely cast or moulded with plastics on both sides.

11. An electric drive motor as claimed in any preceding claim, wherein parts of the cup-shaped rotor (33) are connected to each other by a plastics layer, wherein the layer is applied point-like, annularly, radially, or sheetlike.

12. An electric drive motor as claimed in any preceding claim, wherein the rotor surface (33) is connected to a rotor magnet (21) by way of a plastics layer.

13. An electric drive motor as claimed in any preceding claim, wherein the hub (11) is a one-piece part made of aluminium.

## Patentansprüche

1. Elektrischer Antriebsmotor (30) mit einer eine zentrale Achse definierenden Welle (5), einem Stator (19), der eine Wicklung (75, 76) trägt, welche im wesentlichen koaxial in Bezug zur zentralen Achse angeordnet ist, und einen Rotor (33), welcher im wesentlichen koaxial in Bezug zur zentralen Achse angeordnet ist und in Bezug auf die Statorwicklung (75, 76) außerhalb liegt und diese im wesentlichen umgibt, wobei ein Befestigungsflansch (8) zur Halterung des Motors (30) im wesentlichen koaxial in Bezug auf die zentrale Achse angeordnet ist, der Stator (19) und der Befestigungsflansch (8) zusammen ein stationäres Teil des Motors bilden, der Befestigungsflansch (8) eine sich axial erstreckende Vertiefung, die von einem Befestigungskranz (45) umgeben ist, aufweist, und wobei der Rotor (33) einen topfartigen Rotor aus magnetischem Material aufweist, der in die Vertiefung hineinragt, dadurch gekennzeichnet, daß die Welle (5) zur Halterung einer Nabe (11) für die Drehung des Motors angeordnet ist, wobei die Nabe (11) und der Rotor (33) zusammen ein bewegbares Teil des Motors bilden, daß die Nabe (11) ein Scheibenlagerelement mit einer sich im wesentlichen radial erstreckenden unteren Oberfläche aufweist, daß der topfartige Rotor (33) eine sich im wesentlichen radial erstreckende, im wesentlichen planare Basis (32) aufweist, mit der die untere Oberfläche die Nabe in Eingriff steht, und daß der Durchmesser eines zylindrischen Luftspaltes, der zwischen dem Stator (19) und dem Rotor (33) definiert ist, größer als der externe Durchmesser der Nabe (11) ist.

2. Elektrischer Motor nach Anspruch 1, bei welchem ein Teil des Befestigungsflansches (8) im wesentlichen radial zur im wesentlichen planaren Basis (32) des Rotors (33) ausgerichtet ist.

3. Elektrischer Antriebsmotor nach Anspruch 1 oder 2, bei welchem der Befestigungsflansch (8) eine in axialer Richtung vertiefte Wannenform aufweist und der Befestigungskranz (45) des Befestigungsflansches (8) in Bezug auf die Vertiefung axial versetzt ist und zusammen mit dem Rotor (33) eine angenäherte äußere Labyrintdichtung vorsieht.

4. Elektrischer Antriebsmotor nach einem der vorhergehenden Ansprüche, bei welchem die Welle (5) feststehend ist und über den Stator (19) ragt, und bei welchem die Lagermittel (6, 7) auf der Welle (5), auf der die Nabe (11) gehalten ist, angeordnet sind.

5. Elektrischer Antriebsmotor nach einem der vorhergehenden Ansprüche, bei welchem der Stator (19) innerhalb der Vertiefung im Befestigungsflansch (8) innerhalb der Begrenzungen des Rotors (33) gehalten ist.

6. Elektrischer Antriebsmotor nach einem der vorhergehenden Ansprüche, bei welchem der topfartige Rotor (33) aus weichmagnetischem Material tiefgezogen ist und permanentmagnetische Elemente (21) trägt, wobei das topfartige magnetische Material und die permanentmagnetischen Elemente wirksam den Stator (19) bedecken.

7. Elektrischer Antriebsmotor nach einem der vorhergehenden Ansprüche, bei welchem die Nabe (11) Haltemittel für Informationsspeicherscheiben und eine mit der Nabe drehbare Deckplatte (41) aufweisen und wobei der topfartige Rotor (33) so positioniert ist, um eine magnetische Schutzeinrichtung zum Schutz des Stators (19) vor den Haltemitteln zu bilden.

8. Elektrischer Antriebsmotor nach einem der vorhergehenden Ansprüche, bei welchem bewegbare und feststehende Teile des Motors ineinandergreifen und die ineinandergreifenden, bewegbaren und feststehenden Teile (36, 37, 38) Dichtmittel definieren, die zwischen der Nabe (11) und dem Stator sowie radial innerhalb des Stators und in Bezug auf die Lagermittel (6, 7) für die Nabe in Richtung Flansch axial versetzt angeordnet sind.

9. Elektrischer Antriebsmotor nach einem der vorhergehenden Ansprüche, bei welchem die Welle (5) feststehend ist, ein erstes Teil der Welle in die Vertiefung des Befestigungsflansches (8) montiert ist, und ein zweites Teil der Welle Lagermittel (6, 7) für die Nabe (11) trägt, wobei sich die axiale Länge der Lagermittel (6, 7) der Länge des zweiten Teiles der Welle (5) annähert, und bei welchem die axiale Länge der ersten und zweiten Teile der Welle im wesentlichen gleich groß ist.

10. Elektrischer Antriebsmotor nach einem der vorhergehenden Ansprüche, bei welchem eine Leiterplatte und/oder ein Schutzring (43) zwischen den Befestigungsflansch (8) und der Wicklung des Stators (19) angeordnet ist, und beispielsweise teilweise oder vollständig mit Kunststoff auf beiden Seiten umschmolzen oder umpreßt ist oder sind.

11. Elektrischer Antriebsmotor nach einem der vorhergehenden Ansprüche, bei welchem Teile des topfartigen Rotors (33) miteinander über eine Kunststoffschicht verbunden sind, wobei die Schicht punktweise, ringförmig, radial der flächenartig aufgetragen ist.

12. Elektrischer Antriebsmotor nach einem der vorhergehenden Ansprüche, bei welchem die Rotoroberfläche (33) an einen Rotormagneten (21) mittels einer Kunststoffschicht verbunden ist.

13. Elektrischer Antriebsmotor nach einem der vorhergehenden Ansprüche, bei welchem die Nabe (11) ein einstükkiges Teil aus Aluminium ist.

## Revendications

1. Moteur électrique d'entraînement (30) comprenant un arbre (5) définissant un axe central, un stator (19), qui porte un enroulement (75, 76) disposé sensiblement coaxialement par rapport audit axe central, et un rotor (33) disposé sensiblement coaxialement par rapport audit axe central et de façon à se trouver à l'extérieur par rapport audit enroulement statorique (75, 76) et à entourer substantiellement celui-ci, dans lequel un flasque de montage (8), destiné à supporter ledit moteur (30), est disposé sensiblement coaxialement par rapport audit axe central, ledit stator (19) et ledit flasque de montage (8) formant ensemble une partie fixe dudit moteur, ledit flasque de montage (8) comportant une cavité qui s'étend axialement et qui est entourée par un rebord de montage (45), et dans lequel le rotor (33) est constitué par un rotor en cloche, en une matière magnétique, qui pénètre à l'intérieur de ladite cavité, caractérisé en ce que ledit arbre (5) est agencé de manière à supporter un moyeu (11) destiné à être entraîné en rotation par ledit moteur, ledit moyeu (11) et ledit rotor (33) formant ensemble une partie mobile dudit moteur, en ce que ledit moyeu (11) comprend un élément de support pour disque possédant une surface inférieure qui s'étend sensiblement radialement, en ce que ledit rotor (33) en cloche possède une paroi de fond (32) sensiblement plane, qui s'étend sensiblement radialement et qui est en contact avec ladite surface inférieure dudit moyeu, et en ce que le diamètre d'un entrefer cylindrique, défini entre le stator (19) et le rotor (33), est plus grand que le diamètre externe dudit moyeu (11).

2. Moteur électrique selon la revendication 1, dans lequel une partie dudit flasque de montage (8) est sensiblement alignée radialement avec la paroi de fond sensiblement plane (32) dudit rotor (33).

3. Moteur électrique d'entraînement selon la revendication 1 ou 2, dans lequel ledit flasque de montage (8) à la forme d'une cuvette approfondie dans le sens axial et ledit rebord de montage (45) dudit flasque de montage (8) est décalé axialement par rapport à ladite cavité et, avec ledit rotor (33), forme approximativement un joint extérieur en labyrinthe.

4. Moteur électrique d'entraînement selon l'une quelconque des revendications précédentes, dans lequel ledit arbre (5) est fixe et s'étend au delà du stator (19), et dans lequel des moyens de roulement (6, 7) sont disposés sur ledit arbre (5) et supportent ledit moyeu (11).

5. Moteur électrique d'entraînement selon l'une quelconque des revendications précédentes, dans lequel ledit stator (19) est supporté à l'intérieur de ladite cavité du flasque de montage (8) dans les limites dudit rotor (33).

6. Moteur électrique d'entraînement selon l'une quelconque des revendications précédentes, dans lequel ledit rotor (33) en cloche est formé par emboutissage profond d'un matériau magnétique doux et porte des éléments (21) formant des aimants permanents, ledit matériau magnétique en forme de cloche et lesdits éléments formant des aimants permanents recouvrant le stator (19) de manière effective.

7. Moteur électrique d'entraînement selon l'une quelconque des revendications précédentes, dans lequel ledit moyeu (11) comprend un moyen de support pour des disques de stockage d'information et une plaque-couvercle (41), qui peut tourner avec le moyeu, et dans lequel ledit rotor (33) en cloche est placé de manière à former un moyen de blindage magnétique propre à blinder le stator (19) en le séparant dudit moyen de support.

8. Moteur électrique d'entraînement selon l'une quelconque des revendications précédentes, dans lequel les parties fixe et mobile dudit moteur s'interpénètrent et lesdites parties fixe et mobile interpénétrantes (36, 37, 38) définissent un moyen d'étanchéité qui est disposé entre le moyeu (11) et le stator et se trouve radialement à l'intérieur du stator et axialement décalé par rapport aux moyens de roulement (6, 7) pour le moyeu, en direction du flasque.

9. Moteur électrique d'entraînement selon l'une quelconque des revendications précédentes, dans lequel ledit arbre (5) est fixe, une première partie de l'arbre étant montée dans la cavité dudit flasque de montage (8), et une seconde partie de l'arbre portant des moyens de roulement (6, 7) pour ledit moyeu (11), dans lequel la longueur axiale desdits moyens de roulement (6, 7) s'approche de celle de ladite seconde partie de l'arbre (5), et dans lequel la longueur axiale desdites première et seconde partie de l'arbre est sensiblement la même.

10. Moteur électrique d'entraînement selon l'une quelconque des revendications précédentes, dans lequel une plaque porte-conducteurs et/ou un anneau de blindage (43) est situé entre le flasque de montage (8) et l'enroulement du stator (19) et, par exemple, est ou sont partiellement ou entièrement enrobés de matière plastique, par coulée ou par moulage, des deux côtés.

11. Moteur électrique d'entraînement selon l'une quelconque des revendications précédentes, dans lequel des parties du rotor (33) en cloche sont reliées l'une à l'autre par une couche de matière plastique, et dans lequel la couche est appliquée de manière ponctuelle, de manière annulaire, radialement ou en feuille.

12. Moteur électrique d'entraînement selon l'une quelconque des revendications précédentes, dans lequel la surface du rotor (33) est reliée à un aimant rotorique (21) au moyen d'une couche de matière plastique.

13. Moteur électrique d'entraînement selon l'une quelconque des revendications précédentes, dans lequel le moyeu (11) est une pièce monobloc réalisée en aluminium.
